# EUROPEAN PATENT APPLICATION

(11) **EP 4 466 988 A1**
(43) Date of publication of application: **27.11.2024**
(21) Application number: 24177062.7
(22) Date of filing: 21.05.2024
(51) Int. Cl.: A01K 1/00, A01K 31/00, A01K 31/17, A01K 31/18, A01K 31/22

(54) **SYSTEM FOR A CHICK HATCHERY, METHOD FOR REDUCING PATHOGENS IN A HATCHERY, AND AN AIR CONDITIONING DEVICE**

(30) Priority: 23.05.2023 NL 2034894
(71) Applicant: Terbraak Holding B.V., 7104 BM Winterswijk Meddo (NL)
(72) Inventor: Terbraak, Patrick Theodorus Johannes, 7104 BM Winterswijk Meddo (NL); Krabbenborg, Theo, 7141 KN Groenlo (NL)
(74) Representative: de Jong, Maurits David

(57) **Abstract**

The invention relates to a system for chick hatching, which system comprises:
- a hatchery for housing hatching eggs and hatched chicks for at least a part of a brooding cycle;
- an air conditioning device for conditioning the air in the hatchery, which air conditioning device is at least configured to generate an airflow in the hatchery, characterized in that the air conditioning device comprises:
- a high-voltage generator, which high-voltage generator generates a high-voltage direct current between a first and a second pole, which second pole is preferably connected to the earth;
- at least one ionizer wire, which at least one ionizer wire is electrically conductive and is connected conductively to the first pole and is arranged in the airflow;
- at least one collecting surface, which at least one collecting surface is electrically conductive and is connected conductively to the second pole.

## Description

In a first aspect the invention relates to a system for chick hatching, which system comprises:
- a hatchery for housing hatching eggs and hatched chicks for at least a part of a brooding cycle;
- an air conditioning device for conditioning the air in the hatchery, which air conditioning device is at least configured to generate an airflow in the hatchery.

For incubation of hatching eggs on a large scale use is made of hatcheries in which the essential parameters for hatching are controlled by means of an air conditioning device. Use is sometimes made for this purpose of a single hatchery for the whole brooding cycle, which amounts to about 21 days in chickens. Sometimes, use is made of a hatchery, which is also referred to as brooding room, for hatching, which takes place in the final few days of the brooding cycle. An essential parameter for brooding is in any case the temperature. The air humidity and the supply of fresh air are often also regulated

In a second aspect the invention also relates to a method for reducing pathogens in a hatchery during a brooding cycle with a system according to the invention. In a third aspect the invention also relates to an air conditioning device.

It is now a drawback of the existing systems that a lot of dust is released during the brooding cycle and particularly after hatching, when the chicks are drying. The dust load is so high that regular filter systems will become easily blocked. Pathogens are also widely spread due to the high dust load. This usually necessitates the hatchery to be treated with formalin. Exposure thereto has major drawbacks for both the handling staff and for the chicks.

It is now an object of the invention to reduce or even obviate the above stated drawbacks.

This object is achieved according to the invention with a device according to the preamble, characterized in that the air conditioning device also comprises:
- a high-voltage generator, which high-voltage generator generates a high-voltage direct current between a first and a second pole, which second pole is preferably connected to the earth;
- at least one ionizer wire, which at least one ionizer wire is electrically conductive and is connected conductively to the first pole and is arranged in the airflow;
- at least one collecting surface, which at least one collecting surface is electrically conductive and is connected conductively to the second pole.

With an air conditioning device according to the invention the dust load in a hatchery can be reduced effectively. Use is made for this purpose of ionization of particles in the air, whereby they are attracted to a surface with an opposite charge. The dust then settles in the hatchery. The particles are charged with an ionizer wire, a plurality of which is preferably applied. The ionizer wires are arranged in the airflow so that the ionized air is distributed throughout the hatchery. The high-voltage generator provides here for a very high voltage, which results in substantial ionization. Although the voltage is very high, the power is very low owing to the low current intensity, whereby it is not particularly risky to touch the ionizer wires.

Because the amount of small particles in the air in the hatchery is greatly reduced with a system according to the invention, the amount of pathogens is also greatly reduced. This is very beneficial to the start of the growth of the chicks.

The flow speed of the airflow is preferably no higher than 0.5 m/s, so that only little to no whirling up of already settled particles occurs.

In an embodiment of a system according to the invention a potential difference of at least 20 kV, preferably at least 30 kV, is applied between the first and the second pole.

Good ionization can be achieved with a potential difference of 20 kV or higher between the poles of the high-voltage generator. With a potential difference of 30 kV or higher the effect is even greater, while the chances of spark-over remain limited.

Another embodiment of a system according to the invention is a system wherein the first pole is negative for the purpose of obtaining negative ionization.

In a preferred embodiment of a system according to the invention the at least one ionizer wire comprises a plurality of needle-like protrusions.

A much better ionization is obtained with needle-like protrusions, in that the strong deflection of the electrostatic field at the point provides for an improved charge transfer to the air. In order to make production costs low the needle-like protrusions or needles are preferably formed by cutting a grid, such as for instance of a steel wire mesh, at an angle relative to the wire. A sharp point is hereby obtained in inexpensive manner. With a diameter of ~1mm the needle-like wires form sharp protrusions.

Also according to the invention is an embodiment of a system wherein the at least one ionizer wire and/or the at least one collecting surface is made of stainless steel.

Making the ionizer wire and the collecting surface of stainless steel enables them to be cleaned in simple manner with cleaning agents without the surfaces being affected. When galvanized steel is for instance used, the effects of cleaning agents and rust will diminish its action after some time in that the needle-like protrusions become less sharp. Pathogens can also gather in the porous rust surface. This is difficult to clean due to the rust.

In yet another embodiment of a system according to the invention at least one collecting surface is arranged on a wall of the hatchery, or is formed thereby.

By providing the hatchery with one or more walls which form the collecting surface a very large collecting surface is obtained. This can optionally be combined with collecting surfaces situated elsewhere in the hatchery. When one or more walls of the hatchery are electrically conductive, the collecting surfaces can also be formed by this wall or these walls, whereby no collecting surface need be arranged on the wall.

Also according to the invention is an embodiment of a system wherein a minimum intermediate distance of 20 cm is maintained between the at least one ionizer wire and the at least one collecting surface.

In order to prevent spark-over between an ionizer wire and a collecting surface an intermediate distance of at least 20 cm is employed.

In another embodiment of a system according to the invention a turbulence generator, such as for instance a perforated wall, is arranged upstream of the at least one ionizer wire in the flow direction of the airflow for the purpose of obtaining a turbulent flow at the position of the at least one ionizer wire.

By providing a turbulence generator in the airflow a turbulent flow is generated in the airflow, whereby particles at the position of the at least one ionizer wire stand a greater chance of ending up close to an ionizer wire.

The turbulence generator can for instance be formed by a perforated wall of the hatchery, through which the airflow is introduced into the hatchery.

In another embodiment of a system according to the invention the at least one collecting surface is arranged downstream of the at least one ionizer wire in the flow direction of the airflow.

By also arranging the at least one collecting surface in the airflow, downstream of the at least one ionizer wire, the charged particles will quickly end up in the vicinity of the at least one collecting surface, so that they can settle thereon.

In a second aspect the invention also relates to a method for reducing pathogens in a hatchery during a brooding cycle with a system according to the invention, comprising the steps of:
- introducing hatching eggs into the hatchery;
- switching on the air conditioning device;
- switching on the high-voltage generator;
- removing the hatching eggs and/or chicks from the hatchery after completing at least the final three days of the brooding cycle;
- cleaning the at least one collecting surface.

By cleaning the collecting surface after the hatching eggs have hatched and the brooding cycle has ended, the brooding cycle need not be interrupted for cleaning. The settled particles can then be thoroughly cleaned together with the rest of the hatchery, after which a new cycle can be started.

Because the dust load in the hatchery is greatly reduced during the brooding cycle, the number of pathogens in the hatchery is also reduced very effectively. This will result in far less exposure of the young chicks to pathogens, enabling them to grow better and stronger. The hatchery need no longer be treated with formalin either, since exposure to pathogens remain sufficiently low with the method.

In a third aspect the invention also relates to an air conditioning device according to the system according to the invention, further characterized in that the at least one ionizer wire is tensioned in a frame, wherein the at least one collecting surface is also arranged in the frame, wherein the frame is made of a material with a breakdown voltage of a minimum of 40 kV/mm, such as for instance HDPE, PP or PVC.

Arranging the at least one ionizer wire and at least one collecting surface in a frame enables this component of the air conditioning device to be inserted into a hatchery in simple manner. Making the frame of the material with a very low electric conductivity and a high breakdown voltage in accordance with DIN 53481 prevents a break through the frame and also results in little to no contamination settling on the frame itself.

In a preferred embodiment of an air conditioning device according to the invention the frame is manufactured from elements not comprising cavities, such as for instance from U-profiles.

Application of elements not comprising cavities, such as solid elements or profiles such as U-profiles, prevents inclusion of contamination such as pathogens. This enables the frame to be cleaned in very simple manner, without the risk of pathogen breeding grounds being created in cavities.

Another embodiment of an air conditioning device according to the invention is an air conditioning device wherein at least one of the at least one collecting surface is a corrugated plate.

Application of a corrugated plate, such as for instance an S-shaped plate, makes it possible to obtain further turbulence of air flowing past, whereby more particles come into contact with the collecting surface. A plurality of pleats can be disposed adjacently of each other in order to intensify the effect. Additional cleaning options, such as for instance UV lamps, can optionally be provided between the plates. When placed between the S-shaped plates, direct contact with UV radiation is prevented here.

The air conditioning device according to the third aspect of the invention is preferably applied in a system according to the first aspect of the invention.

These and other features of the invention are further elucidated with reference to the accompanying figures.
Figure 1 is a schematic representation of an embodiment of a system according to the invention.
Figure 2 is a schematic top view of an embodiment of an air conditioning device according to the invention.
Figure 3 is a perspective view of the air conditioning device according to figure 2.
Figure 4 is a schematic flow diagram of an embodiment of a method according to the invention.

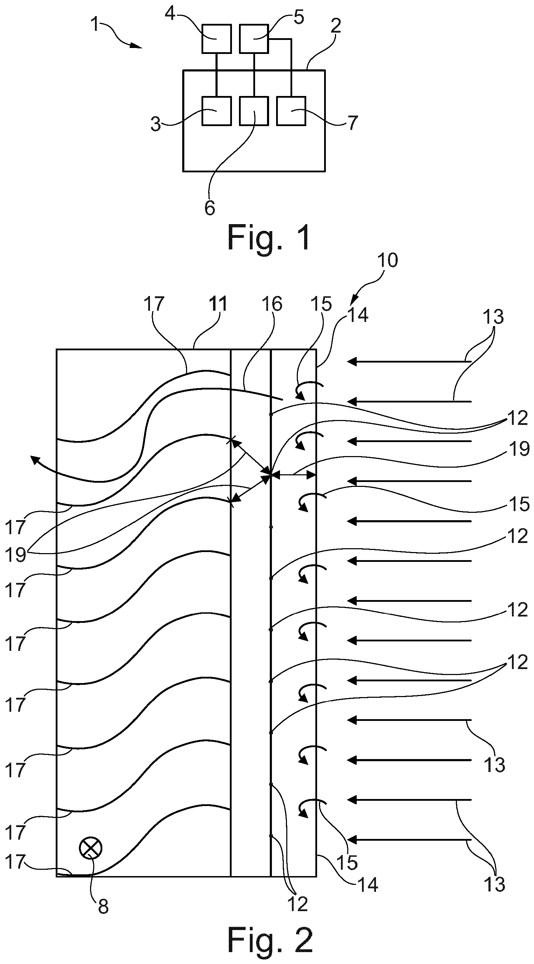

Figure 1 shows a schematic representation of a system 1 according to the invention. The system 1 comprises a hatchery 2 provided with an air conditioning device 3, 4, in this case consisting of a part 3 which is located in the hatchery 2 and a part 4 which is located outside the hatchery 2 and is connected thereto. There is also a high-voltage generator 5 which is connected with a first pole to ionizer wires 6 and a collecting surface 7.

Figure 2 shows a top view of an aspect of an air conditioning device 10 according to the invention. Arranged on a frame 11 are a plurality of ionizer wires 12 which are connected to the first pole of a high-voltage generator (not shown). The airflow 13 and the direction thereof is designated with a plurality of arrows, some of which are designated with a reference numeral. A turbulence generator 14 is arranged upstream of the ionizer wires 12, as seen in flow direction 13. The turbulence generator 14 is a perforated plate. This makes the airflow 15 turbulent. The airflow 16 continues on the path between two corrugated, S-shaped plates 17 forming the collecting surface. The plates 17 are earthed. The airflow 16 has not been drawn between the other plates 17. A UV lamp 18 can optionally be provided between some or all plates 17. In order to prevent spark-over between ionizer wires 12 and plates 17 the minimum mutual distance 19 is kept to 20 cm. This is also the distance that is kept to turbulence generator 14 when it also has a high conductivity.

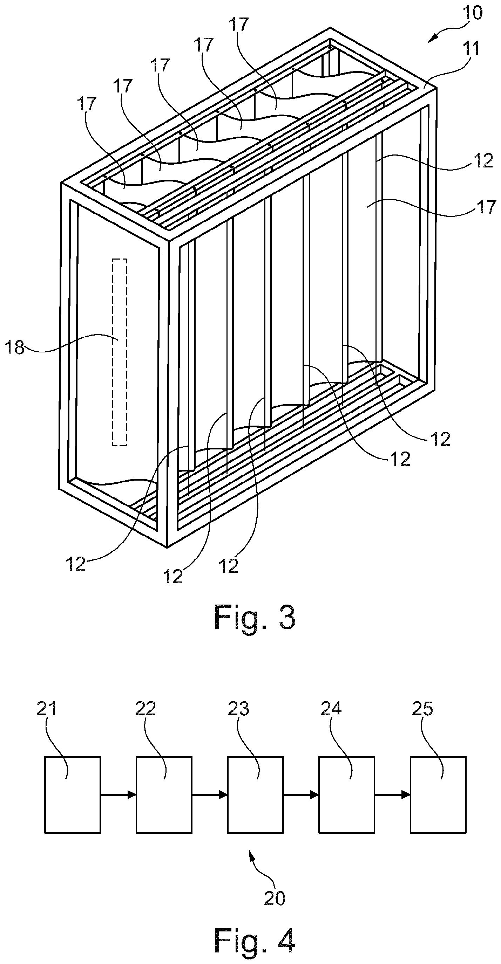

Figure 3 shows a perspective view of the air conditioning device 10 according to figure 2. The turbulence generator according to figure 2 has been omitted here. A plurality of ionizer wires 12 are arranged on frame 11. S-shaped plates 17 are arranged downstream of ionizer wires 12, as seen in the flow direction of the airflow. The optional UV lamp 18 is concealed from view by the plates 17. The frame 11 can for instance be provided with wheels, so that it can be easily displaced.

Figure 4 shows a schematic flow diagram 20 of an embodiment of a method according to the invention. In a first step 21 hatching eggs are introduced into the hatchery. In a second step 22 the air conditioning device is switched on. As part thereof, or in a third step 23, the high-voltage generator is also switched on, this setting into action the ionization. After completing 24 at least the final three days of the brooding cycle, preceded by either the whole period or only a part thereof, the hatching eggs and/or chicks are removed from the hatchery. In a final step 25 the hatchery is cleaned, wherein the collecting surfaces are also cleaned. The dust and any pathogens are hereby removed from the space in effective manner.

## Claims

1. A system for chick hatching, which system comprises:
- a hatchery for housing hatching eggs and hatched chicks for at least a part of a brooding cycle;
- an air conditioning device for conditioning the air in the hatchery, which air conditioning device is at least configured to generate an airflow in the hatchery, **characterized in that** the air conditioning device comprises:
- a high-voltage generator, which high-voltage generator generates a high-voltage direct current between a first and a second pole, which second pole is preferably connected to the earth;
- at least one ionizer wire, which at least one ionizer wire is electrically conductive and is connected conductively to the first pole and is arranged in the airflow;
- at least one collecting surface, which at least one collecting surface is electrically conductive and is connected conductively to the second pole.

2. System according to claim 1, wherein a potential difference of at least 20 kV, preferably at least 30 kV, is applied between the first and the second pole.

3. System according to claim 1 or 2, wherein the first pole is negative for the purpose of obtaining negative ionization.

4. System according to any one of the foregoing claims, wherein the at least one ionizer wire comprises a plurality of needle-like protrusions.

5. System according to any one of the foregoing claims, wherein the at least one ionizer wire and/or the at least one collecting surface is made of stainless steel.

6. System according to any one of the foregoing claims, wherein at least one collecting surface is arranged on a wall of the hatchery, or is formed thereby.

7. System according to any one of the foregoing claims, wherein a minimum intermediate distance of 20 cm is maintained between the at least one ionizer wire and the at least one collecting surface.

8. System according to any one of the foregoing claims, wherein a turbulence generator, such as for instance a perforated wall, is arranged upstream of the at least one ionizer wire in the flow direction of the airflow for the purpose of obtaining a turbulent flow at the position of the at least one ionizer wire.

9. System according to any one of the foregoing claims, wherein the at least one collecting surface is arranged downstream of the at least one ionizer wire in the flow direction of the airflow.

10. A method for reducing pathogens in a hatchery during a brooding cycle with a system according to any one of the foregoing claims, comprising the steps of:
- introducing hatching eggs into the hatchery;
- switching on the air conditioning device;
- switching on the high-voltage generator;
- removing the hatching eggs and/or chicks from the hatchery after completing at least a part of the brooding cycle, preferably after completing at least the final three days of the brooding cycle;
- cleaning the at least one collecting surface.

11. An air conditioning device with the features according to any one of the claims 1-9, **characterized in that** the at least one ionizer wire is tensioned in a frame, wherein the at least one collecting surface is also arranged in the frame, wherein the frame is made of a material with a breakdown voltage of a minimum of 40 kV/mm, such as for instance HDPE, PP or PVC.

12. Air conditioning device according to claim 11, wherein the frame is manufactured from elements not comprising cavities, such as for instance from U-profiles.

13. Air conditioning device according to claim 11 or 12, wherein at least one of the at least one collecting surface is a corrugated plate.

14. Air conditioning device according to any one of the claims 11-13, applied in a system according to any one of the claims 1-9.
